# EUROPEAN PATENT SPECIFICATION

(11) **EP 4 231 417 B1**
(45) Date of publication and mention of the grant of the patent: **25.02.2026**
(21) Application number: 22856200.5
(22) Date of filing: 10.08.2022
(51) Int. Cl.: H01M 50/197, H01M 50/186, H01M 50/178, H01M 50/531, H01M 50/566, C09J 7/29, C09J 5/10, H01M 50/184, H01M 50/191, H01M 50/193, H01M 50/195, H01M 50/536, H01M 50/572, C08K 3/08

(54) **MULTI-LAYER CONDUCTIVE TAPE, SECONDARY BATTERY INCLUDING SAME, AND MANUFACTURING METHOD THEREFOR**
MEHRSCHICHTIGES LEITFÄHIGES BAND, SEKUNDÄRBATTERIE DAMIT UND HERSTELLUNGSVERFAHREN DAFÜR
RUBAN CONDUCTEUR MULTICOUCHE, BATTERIE SECONDAIRE LE COMPRENANT, ET PROCÉDÉ DE FABRICATION ASSOCIÉ

(30) Priority: 11.08.2021 KR 20210105969
(43) Date of publication of application: 23.08.2023
(73) Proprietor: LG Energy Solution, Ltd., Seoul 07335 (KR)
(72) Inventor: JUNG, Jea Bong, Daejeon 34122 (KR); SIM, Dongguk, Daejeon 34122 (KR); AHN, Chang Bum, Daejeon 34122 (KR); SEO, Sangjin, Daejeon 34122 (KR); JANG, Yeongcheol, Daejeon 34122 (KR)
(74) Representative: Goddar, Heinz J.
(86) International application number: PCT/KR2022/011895
(87) International publication number: WO 2023/018203

(56) References cited:
- EP-A1- 4 216 362
- WO-A1-2019/200795
- CN-A- 107 791 641
- CN-B- 107 791 641
- CN-U- 211 367 457
- CN-U- 211 367 457
- KR-A- 20140 032 739
- KR-A- 20140 032 739
- KR-A- 20200 087 438
- KR-A- 20200 087 438
- KR-B1- 101 610 680
- KR-B1- 101 610 680
- KR-B1- 101 851 485
- US-B2- 6 621 166

## Description

### [Technical Field]

This application claims priority to and the benefit of Korean Patent Application No. 10-2021-0105969 filed in the Korean Intellectual Property Office on August 11, 2021.

The present invention relates to a multilayer conductive tape and a secondary battery including the same. In particular, the present invention relates to a multilayer conductive tape which prevents the performance of a secondary battery from being deteriorated due to disconnection occurring at a contact area between an electrode tab and an electrode lead through a multilayered insulating tape, a secondary battery including the same, and a method of manufacturing the secondary battery.

### [Background Art]

As technology development and demand for mobile devices increase, the demand for batteries as an energy source is rapidly increasing, and accordingly, many studies on secondary batteries capable of meeting various needs are being conducted.

In terms of shape, the demand for thin prismatic secondary batteries and pouch-type secondary batteries that can be applied to products, such as mobile phones, is increasing, and in terms of materials, there is an increasing demand for lithium ion batteries, lithium ion polymer batteries, and the like having high energy density, discharge voltage, and output stability.

Typically, the pouch-type secondary battery includes an electrode assembly, electrode tabs extending from the electrode assembly, electrode leads welded to the electrode tabs, a pouch-type exterior material accommodating the electrode assembly and made of a laminate sheet of polymer resin and aluminum, and an insulating tape adhered to a portion where the electrode tab and the electrode lead are welded.

The insulating tape may serve to improve the insulation performance of a positive electrode or a negative electrode, but when the electrode tab and the electrode lead are broken due to the narrow adhesive area of the insulating tape and no electrical conductivity, there is a problem that the secondary battery cannot be used because the secondary battery is no longer operated.

Accordingly, there is a need for a secondary battery structure capable of fundamentally solving these problems, securing process stability, and dramatically improving the problem of defective rates, such as breakage of electrode tabs and electrode leads. CN 107 791 641 B, CN 211 367 457 U, US 6 621 166 B2 and WO 2019/200795 A1 disclose multilayer conductive tapes.

KR 2014 0032739 A discloses a secondary battery with a cover tape provided over the connection portion between electrode tab and electrode lead.

KR 101 610 680 B1 and KR 2020 0087438 A relate to methods of manufacturing for providing a connection between electrode tabs and an electrode lead.

EP 4 216 362 A1 forms prior art according to Art. 54(3) EPC and relates to a method for welding an electrode tab and a lead of an electrode assembly.

### [Detailed Description of the Invention]

### [Technical Problem]

The present invention is conceived under the background art, and a technical problem of the present invention is to provide a multilayer conductive tape for conducting electricity to the outside even when a disconnection occurs in an electrode tab or an electrode lead by placing a layer having electrical conductivity in an area in which the electrode tab is in contact with the electrode lead, a secondary battery including the same, and a method of manufacturing the secondary battery.

### [Technical Solution]

The present invention is defined by the features of the independent claims. Embodiments of the invention are defined in the dependent claims.

An exemplary embodiment of the present disclosure provides a multilayer conductive tape, including: an adhesive layer; an electrically conductive layer positioned on one side of the adhesive layer; an insulating layer positioned on one side of the electrically conductive layer; and a protective layer for protecting an outer surface of the insulating layer.

An exemplary embodiment of the present invention provides a secondary battery including: an electrode assembly in which one or more electrodes and separation membranes are alternately stacked; a battery case in which the electrode assembly is accommodated; an electrode tab protruding and extending from the electrode and stacked for each polarity and welded; an electrode lead stacked and connected to the electrode tab and partially protruding to the outside of the battery case; and the multilayer conductive tape; wherein a width W of the multilayer conductive tape extends from ends of one surface and the other surface of the electrode assembly facing the battery case to at least a part of a portion in which the electrode tab and the electrode lead are connected and overlap.

Still another exemplary embodiment of the present disclosure provides a method of manufacturing a secondary battery, the method including: manufacturing an electrode assembly by alternately stacking a plurality of electrodes and separation membranes; performing pre-welding of collecting and welding electrode tabs provided at ends of the plurality of electrodes; performing main welding by overlapping the ends of the electrode tab and an electrode lead and welding the electrode tab and the electrode lead; adhering a multilayer conductive tape to at least one of an upper side and a lower side of a position where the electrode tab and the electrode lead overlap; and performing thermocompression bonding on an adhesive surface of the multilayer conductive tape by heat.

### [Advantageous Effects]

The multilayer conductive tape according to the exemplary embodiment of the present invention may prevent failure of a current flow due to disconnection, folding, and the like of the electrode tab included in the secondary battery by locating the layer having electrical conductivity in an area where the electrode tab is in contact with the electrode lead.

Further, since the multilayer conductive tape is bonded with a larger area than the area where the electrode tab and the electrode lead are welded, problems, such as disconnection and folding of the electrode tab, may be prevented.

### [Brief Description of Drawings]

FIG. 1 is a cross-sectional view illustrating an insulating tape in the related art.
FIG. 2 is a cross-sectional view illustrating a multilayer conductive tape according to an exemplary embodiment of the present disclosure.
FIG. 3 is a perspective view illustrating a secondary battery according to an exemplary embodiment of the present invention.
FIG. 4 is a partial cross-sectional view of a secondary battery according to an exemplary embodiment of the present invention taken along line A-A' of FIG. 3.
FIG. 5 is a partial cross-sectional view of a secondary battery including a multilayer conductive tape according to another exemplary embodiment of the present invention taken along line A-A' of FIG. 3.
FIG. 6 is a flowchart of a method for manufacturing a secondary battery according to an exemplary embodiment of the present invention.

### <Explanation of Reference Numerals and Symbols>

- 100:: Secondary battery
- 10, 10':: Multilayer conductive tape
- 11:: Adhesive layer
- 12:: Electrically conductive layer
- 13:: Insulating layer
- 14:: Protective layer

- 20:: Battery assembly
- 30:: Electrode tab
- 40:: Electrode lead

### [Best Mode]

Hereinafter, the present invention will be described in detail with reference to the drawings. However, the drawings are for illustrating the present invention, and the scope of the present invention is not limited by the drawings.

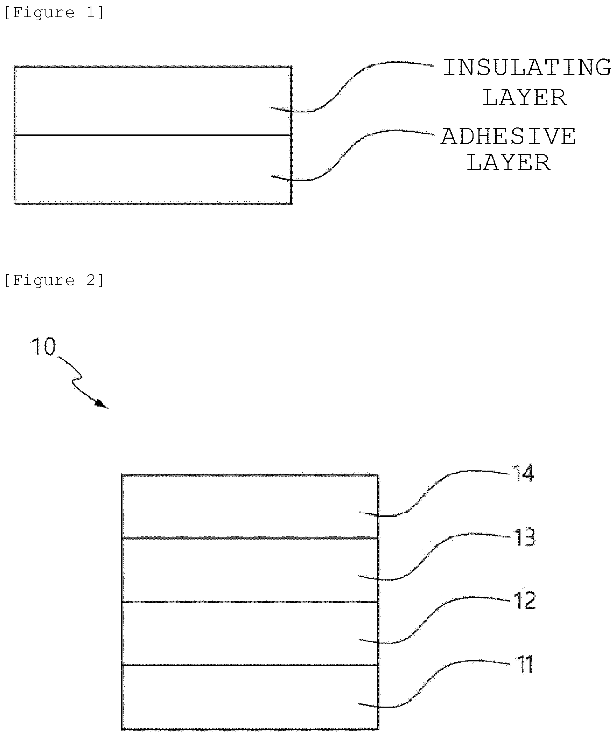

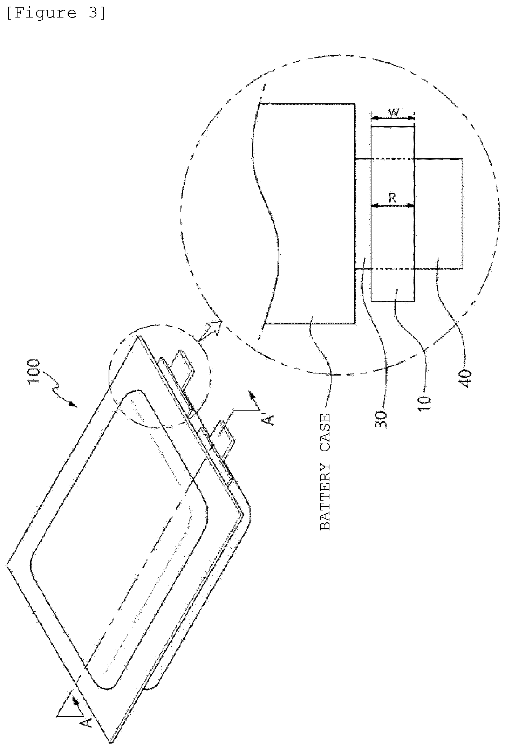

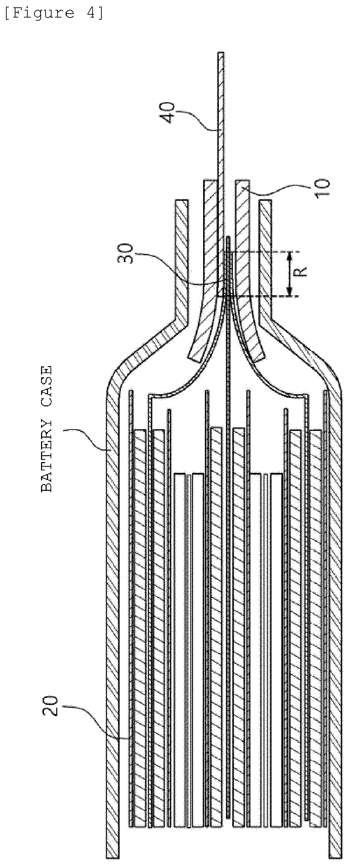

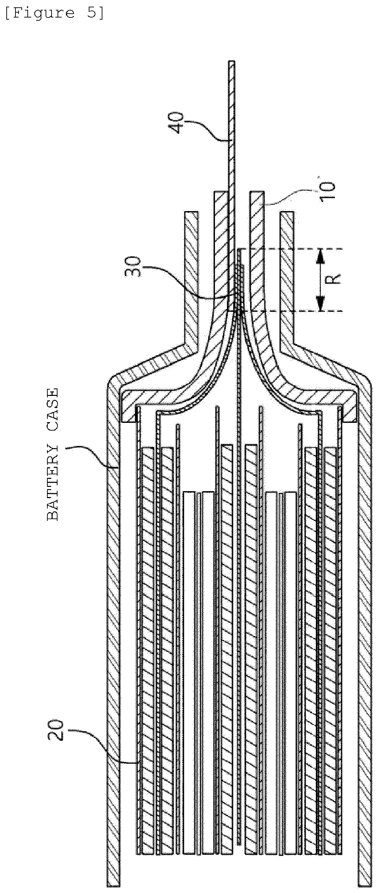

FIG. 2 is a cross-sectional view illustrating a multilayer conductive tape 10 according to an exemplary embodiment of the present disclosure, FIG. 3 is a perspective view illustrating a secondary battery 100 according to an exemplary embodiment of the present invention, FIG. 4 is a part of a cross-sectional view of the secondary battery 100 according to an exemplary embodiment of the present invention taken along line A-A' of FIG. 3, FIG. 5 is a partial cross-sectional view of the secondary battery 100 including a multilayer conductive tape 10' according to another exemplary embodiment of the present invention taken along line A-A' of FIG. 3.

The secondary battery 100 includes a multilayer conductive tape 10, an electrode assembly 20, an electrode tab 30, and an electrode lead 40.

Referring to FIG. 2, the multilayer conductive tape 10 includes an adhesive layer 11, an electrically conductive layer 12, an insulating layer 13, and a protective layer 14.

The adhesive layer 11 is in direct contact with an adherend to adhere the multilayer conductive tape 10, and imparts adhesiveness to the multilayer conductive tape 10. Here, the adherend may be, for example, the electrode tab 30 and the electrode lead 40 of the secondary battery 100 to be described later.

The adhesive layer 11 may be made of a resin having adhesive properties at room temperature. The resin included in the adhesive layer 11 is not particularly limited as long as it can be attached without damaging the adherend, but, for example, may include one or more selected from the group consisting of acrylic, synthetic rubber, and ethyl acetate.

In addition, the adhesive layer 11 may include a material having high electrical conductivity to allow a current to pass through the electrically conductive layer 12 to be described later. In the adhesive layer 11, a material having high electrical conductivity may be mixed with a resin having adhesive properties. The material having high electrical conductivity may include a metal or a carbon-based material, and may include, for example, any one or more of copper, aluminum, titanium, silicon, magnesium, nickel, and stainless steel.

Alternatively, as the adhesive layer 11, a resin having adhesive properties may be applied to a substrate having a plurality of holes penetrating in a stacking direction of the multilayer conductive tape 10. For example, the substrate may be provided in a mesh shape, a dot shape, or the like. In the adhesive layer 11 a conductive material may be included in at least one of the substrate and the resin.

For example, the substrate may include metal fiber or metal foil, plated fiber, plated non-woven fabric, and the like made of one selected from the group consisting of nickel, copper, stainless steel, silver, and gold.

The adhesive layer 11 may be formed in a thickness of 1 µm to 20 µm, preferably in a thickness of 3 µm to 15 µm, and more preferably in a thickness of 6 µm to 12 µm. When the thickness of the adhesive layer 11 is less than 1 µm, the adhesive force is reduced and there is a problem in that the adhesive layer 11 is peeled from the adherend, and when the thickness of the adhesive layer 11 exceeds 20 µm, there is a problem in that the volume occupied in the adherend becomes too large.

The electrically conductive layer 12 is positioned on one side of the adhesive layer 11, and may allow a current to flow through the multilayer conductive tape 10.

That is, when the multilayer conductive tape 10 according to the present invention is attached to the portion where the electrode tab 30 and the electrode lead 40 are welded, the path through which current flows is widened, in addition to the electrode tab 30 and the electrode lead 40, thereby achieving an effect of increasing electrical conductivity.

Further, when the electrode tab 30 is damaged, such as being cut or folded, and is disconnected, a current may flow from the electrode tab 30 to the electrode lead 40 through the electrically conductive layer 12. That is, in the secondary battery 100 to which the multilayer conductive tape 10 according to the present invention is attached, performance degradation due to disconnection of the electrode tab 30 does not occur.

The electrically conductive layer 12 may be formed of a metal. The electrically conductive layer 12 may include a metal or an alloy including one or more metal elements selected from iron, copper, lead, tin, zinc, gold, platinum, mercury, nickel, aluminum, magnesium, cadmium, uranium, thorium, plutonium, beryllium, titanium, zirconium, niobium, vanadium, hafnium, indium, tantalum, molybdenum, tungsten, silicon, germanium, sodium, potassium, and gallium.

That is, the electrically conductive layer 12 may be a layer made of one of the metals or an alloy in which two or more of the metals are mixed.

For example, the electrically conductive layer 12 may be formed of an aluminum and copper alloy. In this case, in the alloy, the weight ratio of aluminum to copper may be 1:2 to 1:5, preferably 1:2 to 1:4, more preferably 1:3.

If the weight ratio of aluminum to copper is less than 1:2, the weight of the electrically conductive layer 12 becomes heavy and there is a problem that processing becomes difficult. Also, when the weight ratio of aluminum to copper is less than 1:5, the strength of the electrically conductive layer 12 may be reduced.

The electrically conductive layer 12 preferably has a thickness of 20 µm to 60 µm. More preferably, the thickness of the electrically conductive layer 12 may be 30 µm to 50 µm. When the thickness of the electrically conductive layer 12 is less than 20 µm, the electrical conductivity of the multilayer conductive tape 10 is reduced, and when the thickness exceeds 60 µm, the increase in electrical conductivity is insignificant, so there is a problem in that economic efficiency is low.

The insulating layer 13 is positioned on one side of the electrically conductive layer 12, and may be positioned on a side of the electrically conductive layer 12 opposite to the adhesive layer 11 with respect to the electrically conductive layer 12.

The insulating layer 13 increases the insulation between the electrically conductive layer 12 and the outside. That is, the insulating layer 13 may primarily prevent the current from flowing from the electrode assembly 20 to the outside.

The insulating layer 13 may have a thickness of 20 µm to 60 µm. Preferably, the insulating layer 13 may be provided in a thickness of 20 µm to 50 µm, more preferably 20 µm to 40 µm.

When the thickness of the insulating layer 13 satisfies the above range, insulation efficiency between the electrically conductive layer 12 and a battery case may be maximized.

The insulating layer 13 may be formed of an organic material, and the organic material may be selected from the group consisting of polyethylene terephthalate, polyimide, polypropylene, polystyrene, polybutylene, polyethylene, and combinations thereof.

The protective layer 14 is positioned in a direction opposite to the electrically conductive layer 12 with respect to the insulating layer 13 to prevent the insulating layer 13 from being damaged.

The protective layer 14 may include any one or more of an organic material and an inorganic material. That is, the protective layer 14 may be provided as a single layer made of an organic material or an inorganic material, or as a multilayer made of an organic material and an inorganic material.

For example, when the protective layer 14 is provided in multilayers, the protective layer 14 is formed in such a way that an organic material layer, an inorganic material layer, and an organic material layer are sequentially stacked, or the organic material layer is surrounded by an inorganic material layer. When the inorganic material layer surrounds the organic material layer like an encapsulation, the inorganic material layer may protect the organic material layer sensitive to oxygen and moisture.

Alternatively, the protective layer 14 may be provided as a composite material layer in which an organic material and an inorganic material are mixed. In this case, in the protective layer 14, the weight ratio of the organic material to the inorganic material may be 1:7 to 1:12, preferably 1:8 to 1:10, and more preferably 1:9.

When the weight ratio of the organic material to the inorganic material included in the protective layer 14 is less than 1:7, the content of the inorganic material is small, so that heat resistance and strength may be reduced. In addition, when the weight ratio of the organic material to the inorganic material exceeds 1:12, the moisture permeation rate of the multilayer conductive tape 100 increases, so that there occurs a problem in that moisture permeates into the electrode tab 30 and the electrode lead 40.

That is, the protective layer 14 can improve the heat resistance and mechanical strength of the multilayer conductive tape.

The protective layer 14 may have a thickness of 20 µm to 60 µm. Preferably, the protective layer 14 may be provided with a thickness of 20 µm to 50 µm, more preferably 20 µm to 40 µm.

The multilayer conductive tape 10 according to the present disclosure may further include a second insulating layer. The second insulating layer is positioned on a surface opposite to the surface on which the insulating layer 13 is positioned with respect to the protective layer 14.

The second insulating layer may increase insulation between the battery cases in which the secondary battery 100 is mounted, thereby preventing current from flowing from the electrode assembly 20 to the battery case.

The second insulating layer may be formed of an organic material, and the organic material may be selected from the group consisting of polyethylene terephthalate, polyimide, polypropylene, polystyrene, polybutylene, polyethylene, and combinations thereof.

The thickness of the second insulating layer may be 20 µm to 60 µm. Preferably, the second insulating layer may have a thickness of 20 µm to 50 µm, more preferably 20 µm to 40 µm.

When the thickness of the second insulating layer satisfies the above range, sealing force and insulation efficiency between the battery case and the electrode tab 30 and the lead 40 may be increased. In addition, it is possible to prevent moisture from permeating into the electrode assembly 20 due to damage to the insulating layer 13 and the second insulating layer 15.

The second insulating layer protects the welding portion where the electrode tab 30 and the electrode lead 40 are welded, and minimizes the gap between the electrode lead 40 and the welding portion and the battery case, thereby minimizing the sealing interference of the multilayer conductive tape 10 between the electrode lead 40 and the welding portion where the electrode tab 30 and the electrode lead 40 are welded and the battery case.

The positive electrode and the negative electrode included in the electrode assembly 20 may be stacked in a state where the positive electrode batteries are pre-welded with each other and the negative electrode batteries are pre-welded with each other. In the electrode assembly 20, the electrodes and the separation membranes may be stacked in an order of the pre-welded negative electrode/separation membrane/positive electrode/separation membrane/negative electrode. Then, the electrode assembly 20 may be accommodated in the battery case to be main-welded.

The electrode tab 30 extends from one side of the electrode assembly 20 and may include a positive electrode tab and a negative electrode tab. The electrode assembly 20 may include a positive electrode tab and a negative electrode tab which are pre-welded to extend from one sides of the positive electrode and the negative electrode, respectively. The positive electrode tab and the negative electrode tab may be spaced apart from each other by a predetermined distance in the same direction with respect to the electrode assembly **20.**

The electrode lead 40 extends the electrode tab 30 for connection with an external object, and may be connected to the electrode tab 30 by welding.

The multilayer conductive tape 10 may be adhered to a portion where the electrode tab 30 and the electrode lead 40 are connected to electrically connect the electrode tab 30 and the electrode lead 40**.**

In the multilayer conductive tape 10**,** when the connection portion between the electrode tab 30 and the electrode lead 40 is damaged and the electrode tab 30 and the electrode lead 40 are disconnected, the current may be transmitted to an external object by the adhesive layer 11 and the conductive layer 12 included in the multilayer conductive tape 10.

The multilayer conductive tape 10 may be adhered to at least one of an upper side and a lower side of the bonding portion between the electrode tab 30 and the electrode lead 40**.**

In one exemplary embodiment, the multilayer conductive tape 10 may be respectively adhered to the upper side and the lower side of the bonding portion of the electrode tab 30 and the electrode lead 40. The multilayer conductive tape 10 may be sealed by fusion bonding both end edges of the multilayer conductive tape 10 by thermocompression bonding. Accordingly, the multilayer conductive tape 10 may protect the bonding portion between the electrode tab 30 and the electrode lead 40 from external air and oxygen.

Both end edges of the multilayer conductive tape 10 according to the exemplary embodiment may mean portions in which the electrode tab 30 and the electrode lead 40 are not positioned in a direction perpendicular to the direction in which the electrode lead 40 extends from the electrode tab 30. That is, the multilayer conductive tape 10 may be adhered in a direction perpendicular to the direction in which the electrode lead 40 extends from the electrode tab 30, and a portion in which the electrode tab 30 and the electrode lead 40 are not included may occur between the multilayer conductive tapes 10 positioned on the upper and lower sides of the portion where the electrode tab 30 and the electrode lead 40 are overlapped.

Here, the upper and lower sides may mean one side and the other side in the stacking direction of the electrode tab 30 and the electrode lead 40.

According to the invention the multilayer conductive tape 10 covers at least a portion of the portion in which the electrode tab 30 and the electrode lead 40 are connected and overlap. That is, the width W of the multilayer conductive tape 10 may be wider than the width of the portion where the electrode tab 30 and the electrode lead 40 are connected to and overlap each other. Here, the width of the portion R where the electrode tab 30 and the electrode lead 40 are connected and overlap may mean a length in the same direction as the width of the multilayer conductive tape 10.

Referring to FIG. 4, the width of the multilayer conductive tape 10 according to the exemplary embodiment is 1.5 times to 5 times, preferably 2 times to 4 times, and more preferably, 2.5 times to 3.5 times the width of the portion where the electrode tab 30 and the electrode lead 40 connected.

Referring to FIG. 5, the width of a multilayer conductive tape 10' according to another exemplary embodiment may extend in the width direction of the multilayer conductive tape 10' to at least a portion of a portion R where the electrode tab 30 and the electrode lead 40 are connected to and overlap each other from ends of one surface and the other surface of the electrode assembly 20 facing the battery case. An end of the electrode assembly 20 to which the multilayer conductive tape 10'is adhered may include an end in a direction in which the electrode tab extends.

The width W of the multilayer conductive tape 10 means a distance in a direction perpendicular to the direction in which the electrode tab 30 and the electrode lead 40 are stacked, or in the direction in which the electrode lead 40 extends from the electrode tab 30.

The multilayer conductive tape 10 surrounds the entire connection portion of the electrode tab 30 and the electrode lead 40, thereby protecting the electrode tab 30 and the electrode lead 40 from being damaged and expanding the flow path through which the current flows. Here, the connection portion is a position where the electrode tab 30 and the electrode lead 40 are stacked and connected, and means a portion where the electrode tab 30 and the electrode lead 40 overlap. That is, the connection portion between the electrode tab 30 and the electrode lead 40 may have the same meaning as the overlapping or overlapping portion of the electrode tab 30 and the electrode lead 40.

The multilayer conductive tape 10 is adhered to the connection portion of the electrode tab 30 and the electrode lead 40, and then thermocompressed, so that the contact surface between the electrode tab 30 and the electrode lead 40 and the multilayer conductive tape 10 may be sealed.

For example, through thermocompression bonding, the protective layer 14 or the second insulating layer are melt by applying a constant temperature to the multilayer conductive tape 10 and pressure is applied to the multilayer conductive tape 10 from the outside to fuse the contact surface between the electrode tab 30 and the electrode lead 40 and the multilayer conductive tape 10.

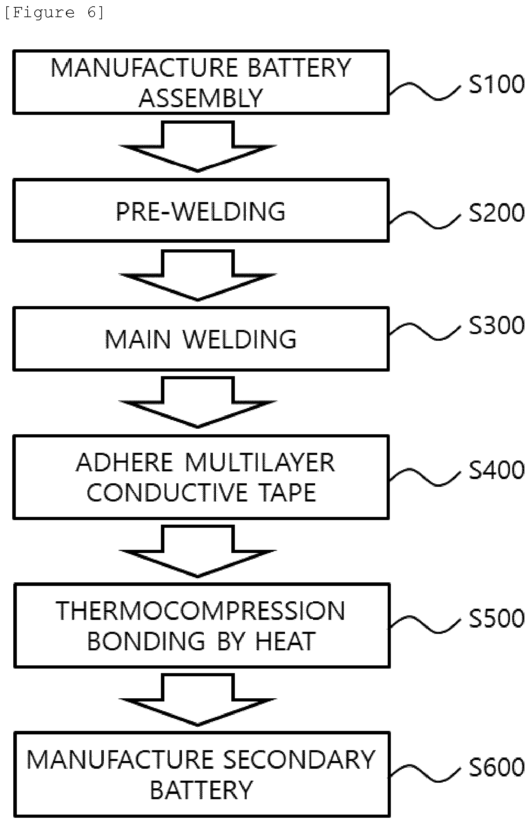

FIG. 6 is a flowchart of a method for manufacturing a secondary battery according to an exemplary embodiment of the present invention.

A method for manufacturing a secondary battery includes operation S100 of manufacturing an electrode assembly, operation S200 of performing pre-welding, operation S300 of performing main welding, operation S400 of adhering a multilayer conductive tape, operation S500 performing thermocompression bonding, and operation S600 of assembling the electrode assembly and a battery case to manufacture a secondary battery.

In the operation S100 of manufacturing the electrode assembly, an electrode assembly is manufactured by alternately staking a plurality of electrodes and separation membranes, and the plurality of electrodes and separation membranes may be stacked in an order of a positive electrode, a separation membrane, a negative electrode, a separation membrane, and a positive electrode.

More specifically, the electrode assembly may include a plurality of positive electrodes stacked and a plurality of negative electrodes stacked, and a separation membrane between the positive electrode and the negative electrode. In addition, electrode tabs according to polarities may be connected to the positive electrode and the negative electrode.

In the operation S200 of performing pre-welding, the electrode tabs included in the electrode assembly in the operation S100 of manufacturing the electrode assembly are collected and welded, and each of the positive electrode tab and the negative electrode tab may be welded according to polarity.

For example, since the electrode assembly includes a plurality of positive electrodes, a plurality of positive electrode tabs may also be included. In the electrode assembly, a plurality of positive electrode tabs is stacked to form a positive electrode tab stack part, and then the positive electrode tabs may be pre-welded by welding.

In addition, the pre-welding may be applied to all surfaces where the electrode tabs are stacked and contacted.

In the operation S300 of performing main welding, electrode leads are stacked and welded on the ends of the electrode tabs, and the electrode lead may be welded to the upper or lower portion of the electrode tab.

The electrode leads may be welded to the electrode tab by overlapping the position where the electrode tab is pre-welded. For example, the electrode lead is positioned below the pre-welding surface on which the positive electrode tabs are stacked and welded, so that all surfaces of the electrode lead that are in contact with the electrode tabs may be welded.

The electrode lead may be positioned to overlap the entire surface on which the electrode tab is pre-welded, or may be positioned to overlap a portion of the surface on which the electrode tab is pre-welded.

In the operation S400 of adhering the multilayer conductive tape, the multilayer conductive tape is adhered to at least one of an upper side and a lower side of the stack part in which the electrode tab and the electrode lead are stacked, and in the operation S500 of performing thermocompression bonding is performing thermocompression bonding by applying heat and pressure to the adhesive surface of the multilayer conductive tape.

Here, the adhesive surface means a surface on which the multilayer conductive tape and the electrode tab or electrode lead is in contact with each other as the multilayer conductive tape is adhered, and when the multilayer conductive tape is adhered only to the upper side of the stack part, an adhesive surface between the electrode tab and the multilayer conductive tape is formed in the direction of the electrode assembly of the multilayer conductive tape, and in the opposite direction, an adhesive surface between the electrode lead and the multilayer conductive tape may be formed.

Also, the adhesive surface may be sealed by thermocompression bonding. For example, heat and pressure are applied to the multilayer conductive tape by a hot pressing means, and the layer that is located at the top of the multilayer conductive tape and is in contact with the hot pressing means melts by the heat and pressure, so that the multilayer conductive tape may be fused with the electrode tab or the electrode lead.

The multilayer conductive tape may be thermocompressed at a temperature of 50°C to 300°C at a pressure of 0.2 mpa to 1.0 mpa, preferably at a temperature of 100°C to 250°C at a pressure of 0.2 mpa to 0.7 mpa, and more preferably, at a temperature of 160°C to 200°C and a pressure of 0.2 mpa to 0.4 mpa.

When the thermocompression bonding condition is a temperature of less than 50°C and a pressure of less than 0.2 mpa, the multilayer conductive tape is not sealed with the electrode tab and electrode lead, and a boundary is formed in the portion where the multilayer conductive tape and the electrode tab or the multilayer conductive tape and the electrode lead are adhered, so that a problem of reducing the adhesive force between the multilayer conductive tape and the electrode tab and the electrode lead may occur.

Further, when the thermocompression bonding condition exceeds 300°C and exceeds a pressure of 1.0 mpa, the increasing effect of adhesion and sealing performance of the multilayer conductive tape is insignificant compared to an increase in energy consumption.

For example, when the multilayer conductive tape is adhered to the upper and lower sides of the stack part where the electrode tab and the electrode lead are stacked and welded, the multilayer conductive tape positioned on the upper and lower sides of the stack are adhered to each other in portions where the electrode tab and the electrode lead are not positioned.

In this case, when thermocompression bonding is performed on the adhesive surface of the multilayer conductive tape, the portion where the multilayer conductive tapes are bonded to each other may also be sealed by thermocompression bonding, and the multilayer conductive tape may be sealed in the form of encapsulation.

The operation S600 of assembling the electrode assembly and a battery case to manufacture a secondary battery may further include operation 610 of preparing a battery case, operation S620 of assembling the battery case and the electrode assembly, and operation S630 of sealing the battery case.

In the operation 610 of preparing the battery case, a battery case precursor made of a flexible material, for example, a laminate-type sheet, may be pressed with a punch to form a lower case including an accommodating part in which the electrode assembly may be accommodated.

After accommodating the electrode assembly in the accommodation part of the lower case, an upper case covering the electrode assembly from the upper portion may contact and seal the lower case so that the electrode assembly is not separated to the outside of the battery case. In this case, the battery case may be sealed so that the electrode tab and the electrode lead are exposed.

### [Mode for Carrying out the Invention]

### <Example 1>

Example 1 is the secondary battery according to the present invention illustrated in FIG. 4, is the secondary battery in which the multilayer conductive tape including the adhesive layer, the electrically conductive layer, the insulating layer, the protective layer, and the second insulating layer is attached to a welding portion where the electrode tab and the electrode lead are welded. In this case, the secondary battery according to the exemplary embodiment was manufactured by attaching the multilayer conductive tape after disconnecting the welding portion.

The adhesive layer was prepared by coating an acrylic resin on both sides of copper foil, and was provided with a thickness of 10 µm.

The electrically conductive layer was attached to one surface of the adhesive layer with an aluminum plate having a thickness of 40 µm.

The insulating layer was attached to one surface of the electrically conductive layer that is, the opposite surface to the surface in contact with the adhesive layer between both surfaces of the electrically conductive layer, in the form of a plate containing polypropylene (PP) with a thickness of 40 µm.

The protective layer is a form in which polypropylene is placed inside the alumina layer in the form of an encapsulation, and the protective layer was attached to one surface of the insulating layer in the form of a 40 µm thick layer containing a combination of alumina and polypropylene, and the second insulating layer was attached to one surface of the protective layer in the form of a 30 µm thick plate containing polypropylene (PP).

### <Example 2>

Example 2 is a secondary battery configured in the same manner as in Example 1, except that the electrically conductive layer is attached to one surface of the adhesive layer with a copper plate having a thickness of 40 µm.

### <Comparative Example>

The Comparative Example is a secondary battery in which a multilayer tape including an adhesive layer and an insulating layer is attached to a welding area where an electrode tab and an electrode lead are welded. At this time, the secondary battery was manufactured by attaching a multilayer tape to an electrode assembly of a good quality in which disconnection did not occur at a welding portion of the secondary battery according to the Comparative Example.

The adhesive layer and the insulating layer were configured in the same manner as in Example 1.

**[Table 1]**

| Content | Result | Comparative Example | Example 1 |
|---|---|---|---|
| Capacity (≥131.84Ah) | OK | 133.7 | 133 |
| Insulation resistance (>100 MΩ) | OK | 908 | 1000 |
| Insulation voltage (≤0.5V) | OK | 0.001 | 0.002 |
| Weight (1640±15g) | OK | 1652.1 | 1651.3 |
| Output voltage (3.586V≤X≤3.622V) | OK | 3.59 | 3.59 |
| AC-imp(0.4≤X≤0.8) | OK | 0.35 | 0.38 |

**[Table 2]**

| Division | | Tensile strength (kgf) | Average (kgf) |
|---|---|---|---|
| Comparative | Positive | 39 | 41 |
| Example | electrode | 45 | |
| | | 37 | |
| | Negative electrode | 38 | 41 |
| | | 38 | |
| | | 45 | |
| Example | Example 1 | 49 | 52 |
| | | 53 | |
| | | 54 | |
| | Example 2 | 54 | 50 |
| | | 49 | |
| | | 48 | |

The capacity of the secondary battery was charged at 1 C to **4.2** V under constant current/constant voltage (CC/CV) conditions at 25°C, and then discharged at 1 C up **to 2.5** V under constant current (CC) conditions, and the discharge capacity was measured.

For insulation resistance and insulation voltage, whether leakage current flows was checked by measuring the resistance 1 second after applying a voltage of 50 V between the negative electrode and the pouch and the positive electrode and the pouch of the secondary battery, and whether insulation was made between the positive/negative electrode and the pouch was evaluated by evaluating the resistance level.

AC impedance (AC-imp) was measured using EIS equipment (Biologic potentiostat).

Tensile strength was measured by using an INSTRON 4465 apparatus, and according to ASTM D638 standard.

Referring to Table 1, it can be seen that physical properties, such as capacity, insulation resistance, insulation voltage, and AC impedance of Example 1 including the disconnection at the welding portion where the electrode tab and the electrode lead are welded are similar to those of the secondary battery having the good quality of the Comparative Example.

More specifically, since the secondary battery according to Example 1 was not affected by the disconnection of the welding portion and the current passed through the multilayer conductive tape, the AC impedance value of Example 1 exhibited similar characteristics to the AC impedance value of the Comparative Example.

Further, in the secondary battery according to Example 1, current does not flow by the insulating layer, the protective layer, and the second insulating layer between the welding portion and the battery case, more specifically, between the electrically conductive layer and the battery case of the multilayer conductive tape, the secondary battery according to Example 1 exhibited the similar insulation resistance and insulation voltage values to those of the Comparative Example of good quality.

Referring to Table 2, it can be seen that in Examples 1 and 2, the tensile strength are increased by 21% to 26% compared to the Comparative Example. Here, the tensile strength refers to the strength measured in a state in which current does not flow after at least one of the welding portion and the multilayer conductive tape (or multilayer tape) is cut.

In the secondary battery according to the Comparative Example, when the welding portion to in which the multilayer tape is adhered is tensioned, current does not flow when the welded portion is cut, so that it can be seen that the tensile strength, which is the strength value at the time when the welding portion is cut, is relatively smaller than those of Examples 1 and 2.

On the other hand, in the secondary batteries according to Examples 1 and 2, current flows through the multilayer conductive tape even when the welding portion is cut. Accordingly, in the secondary batteries according to Examples 1 and 2, when both the welding portion and the multilayer conductive tape are cut, the current is blocked, so that the tensile strength of Examples 1 and 2 may correspond to the tensile strength until both the welding portion and the multilayer conductive tape are cut. Therefore, the tensile strength of Examples 1 and 2 was exhibited higher than that of the Comparative Example.

## Claims

1. A secondary battery, comprising:
an electrode assembly in which one or more electrodes and separation membranes are alternately stacked;
a battery case in which the electrode assembly is accommodated;
an electrode tab protruding and extending from the electrode and stacked for each polarity and welded;
an electrode lead stacked and connected to the electrode tab and partially protruding to the outside of the battery case;
**characterized in that** the second battery further comprises:
a multilayer conductive tape, comprising:
an adhesive layer;
an electrically conductive layer positioned on one side of the adhesive layer;
an insulating layer positioned on one side of the electrically conductive layer; and
a protective layer for protecting an outer surface of the insulating layer;
wherein a width W of the multilayer conductive tape extends in a width direction from ends of one surface and the other surface of the electrode assembly facing the battery case to at least a part of a portion in which the electrode tab and the electrode lead are connected and overlap.

2. The secondary battery of claim 1, wherein the electrically conductive layer includes a metal, and the metal includes any one or more of copper, aluminum, titanium, silicon, magnesium, and stainless steel.

3. The secondary battery of claim 1, wherein the insulating layer is made of a material selected from the group consisting of polyethylene terephthalate, polyimide, polypropylene, polystyrene, polybutylene, polyethylene, and combinations thereof.

4. The secondary battery of claim 1, further comprising:
a second insulating layer positioned on one side of the protective layer.

5. The secondary battery of claim 1, wherein the adhesive layer includes a substrate in the form of a mesh and a resin having adhesiveness,
wherein any one or more of the substrate and the resin includes an electrically conductive material.

6. The secondary battery of claim 1, wherein the multilayer conductive tape is adhered to at least one of an upper side and a lower side in a stacking direction at a position where the electrode tab and the electrode lead are stacked and connected.

7. The secondary battery of claim 6, wherein the multilayer conductive tape covers at least a part of a portion in which the electrode tab and the electrode lead are connected and overlap.

8. The secondary battery of claim 7, wherein in the multilayer conductive tape, a width W in a direction in which the electrode lead extends to the electrode tab is greater than a width of a portion where the electrode tab and the electrode lead are connected and overlap.

9. The secondary battery of claim 6, wherein the multilayer conductive tape seals a contact surface of the electrode tab and the electrode lead and the battery case.

10. The secondary battery of claim 6, wherein the multilayer conductive tape is adhered to an upper side and a lower side of a position where the electrode tab and the electrode lead are connected and overlap in a direction perpendicular to a direction in which the electrode lead extends, and
the multilayer conductive tapes at an upper side and a lower side positioned in a portion where the electrode tab and the electrode lead are not positioned in the direction perpendicular to the direction in which the electrode lead extends are adhered to each other and sealed.

11. A method of manufacturing a secondary battery according to claim 1, the method comprising:
manufacturing an electrode assembly by alternately stacking a plurality of electrodes and separation membranes;
performing pre-welding of collecting and welding electrode tabs provided at ends of the plurality of electrodes;
performing main welding by overlapping the ends of the electrode tab and an electrode lead and welding the electrode tab and the electrode lead;
adhering a multilayer conductive tape to at least one of an upper side and a lower side of a position where the electrode tab and the electrode lead overlap; and
performing thermocompression bonding on an adhesive surface of the multilayer conductive tape by heat,
wherein the multilayer conductive tape comprises:
an adhesive layer;
an electrically conductive layer positioned on one side of the adhesive layer;
an insulating layer positioned on one side of the electrically conductive layer; and
a protective layer for protecting an outer surface of the insulating layer,
wherein a width W of the multilayer conductive tape extends in a width direction from ends of one surface and the other surface of the electrode assembly facing the battery case to at least a part of a portion in which the electrode tab and the electrode lead are connected and overlap.

12. The method of claim 11, wherein the operation of performing the thermocompression bonding includes performing the thermocompression bonding on the adhesive surface of the multilayer conductive tape at a temperature of 50°C to 300°C at a pressure of 0.2 mpa to 1.0 mpa.

13. The method of claim 11, wherein the multilayer conductive tape is adhered to an upper side and a lower side of the position where the electrode tab and the electrode lead overlap, and a portion in which the multilayer conductive tapes adhered to the upper and lower sides are in contact with each other is sealed through the thermocompression bonding.

## Patentansprüche

1. Sekundärbatterie, umfassend:
eine Elektrodenanordnung, in der eine oder mehrere Elektroden und Trennmembranen abwechselnd gestapelt sind;
ein Batteriegehäuse, in dem die Elektrodenanordnung untergebracht ist;
eine Elektrodenlasche, die von der Elektrode vorsteht und sich von dieser erstreckt und für jede Polarität gestapelt und geschweißt ist;
eine Elektrodenleitung, die gestapelt und mit der Elektrodenlasche verbunden ist und teilweise zur Außenseite des Batteriegehäuses vorsteht;
**dadurch gekennzeichnet, dass** die zweite Batterie ferner umfasst:
ein mehrschichtiges leitfähiges Band, umfassend:
eine Klebeschicht;
eine elektrisch leitfähige Schicht, die auf einer Seite der Klebeschicht positioniert ist;
eine Isolierschicht, die auf einer Seite der elektrisch leitfähigen Schicht positioniert ist; und
eine Schutzschicht zum Schützen einer Außenfläche der Isolierschicht;
wobei sich eine Breite W des mehrschichtigen leitfähigen Bands in einer Breitenrichtung von Enden einer Oberfläche und der anderen Oberfläche der Elektrodenanordnung, die dem Batteriegehäuse zugewandt ist, zu mindestens einem Teil eines Abschnitts erstreckt, in dem die Elektrodenlasche und die Elektrodenleitung verbunden sind und überlappen.

2. Sekundärbatterie nach Anspruch 1, wobei die elektrisch leitfähige Schicht ein Metall beinhaltet und das Metall eines oder mehrere von Kupfer, Aluminium, Titan, Silizium, Magnesium und Edelstahl beinhaltet.

3. Sekundärbatterie nach Anspruch 1, wobei die Isolierschicht aus einem Material hergestellt ist, das aus der Gruppe ausgewählt ist, die aus Polyethylenterephthalat, Polyimid, Polypropylen, Polystyrol, Polybutylen, Polyethylen und Kombinationen davon besteht.

4. Sekundärbatterie nach Anspruch 1, ferner umfassend:
eine zweite Isolierschicht, die auf einer Seite der Schutzschicht positioniert ist.

5. Sekundärbatterie nach Anspruch 1, wobei die Klebeschicht ein Substrat in Form eines Netzes und eines Harzes mit Klebrigkeit beinhaltet,
wobei eines oder mehrere von dem Substrat und dem Harz ein elektrisch leitfähiges Material beinhalten.

6. Sekundärbatterie nach Anspruch 1, wobei das mehrschichtige leitfähige Band an mindestens einer von einer Oberseite und einer Unterseite in einer Stapelrichtung an einer Position angeklebt ist, an der die Elektrodenlasche und die Elektrodenleitung gestapelt und verbunden sind.

7. Sekundärbatterie nach Anspruch 6, wobei das mehrschichtige leitfähige Band mindestens einen Teil eines Abschnitts bedeckt, in dem die Elektrodenlasche und die Elektrodenleitung verbunden sind und überlappen.

8. Sekundärbatterie nach Anspruch 7, wobei in dem mehrschichtigen leitfähigen Band eine Breite W in einer Richtung, in der sich die Elektrodenleitung zu der Elektrodenlasche erstreckt, größer ist als eine Breite eines Abschnitts, in dem die Elektrodenlasche und die Elektrodenleitung verbunden sind und überlappen.

9. Sekundärbatterie nach Anspruch 6, wobei das mehrschichtige leitfähige Band eine Kontaktfläche der Elektrodenlasche und der Elektrodenleitung und das Batteriegehäuse abdichtet.

10. Sekundärbatterie nach Anspruch 6, wobei das mehrschichtige leitfähige Band an einer Oberseite und einer Unterseite einer Position angeklebt ist, an der die Elektrodenlasche und die Elektrodenleitung verbunden sind und in einer Richtung senkrecht zu einer Richtung überlappen, in der sich die Elektrodenleitung erstreckt, und
die mehrschichtigen leitfähigen Bänder an einer Oberseite und einer Unterseite, die in einem Abschnitt positioniert sind, in dem die Elektrodenlasche und die Elektrodenleitung nicht in der Richtung senkrecht zu der Richtung positioniert sind, in der sich die Elektrodenleitung erstreckt, aneinander angeklebt und abgedichtet sind.

11. Verfahren zum Herstellen einer Sekundärbatterie nach Anspruch 1, wobei das Verfahren umfasst:
Herstellen einer Elektrodenanordnung durch abwechselndes Stapeln einer Vielzahl von Elektroden und Trennmembranen;
Durchführen von Vorschweißen von Sammel- und Schweißelektrodenlaschen, die an Enden der Vielzahl von Elektroden bereitgestellt sind;
Durchführen von Hauptschweißen durch Überlappen der Enden der Elektrodenlasche und einer Elektrodenleitung und Schweißen der Elektrodenlasche und der Elektrodenleitung;
Kleben eines mehrschichtigen leitfähigen Bands an mindestens einer von einer Oberseite und einer Unterseite einer Position, an der die Elektrodenlasche und die Elektrodenleitung überlappen; und
Durchführen von Thermokompressionsbonden auf einer Klebefläche des mehrschichtigen leitfähigen Bands durch Wärme,
wobei das mehrschichtige leitfähige Band umfasst:
eine Klebeschicht;
eine elektrisch leitfähige Schicht, die auf einer Seite der Klebeschicht positioniert ist;
eine Isolierschicht, die auf einer Seite der elektrisch leitfähigen Schicht positioniert ist; und
eine Schutzschicht zum Schützen einer Außenfläche der Isolierschicht,
wobei sich eine Breite W des mehrschichtigen leitfähigen Bands in einer Breitenrichtung von Enden einer Oberfläche und der anderen Oberfläche der Elektrodenanordnung, die dem Batteriegehäuse zugewandt ist, zu mindestens einem Teil eines Abschnitts erstreckt, in dem die Elektrodenlasche und die Elektrodenleitung verbunden sind und überlappen.

12. Verfahren nach Anspruch 11, wobei der Vorgang des Durchführens des Thermokompressionsbondens das Durchführen des Thermokompressionsbondens auf der Klebefläche des mehrschichtigen leitfähigen Bands bei einer Temperatur von 50 °C bis 300 °C bei einem Druck von 0,2 mPa bis 1,0 mPa beinhaltet.

13. Verfahren nach Anspruch 11, wobei das mehrschichtige leitfähige Band an einer Oberseite und einer Unterseite der Position angeklebt ist, an der die Elektrodenlasche und die Elektrodenleitung überlappen, und ein Abschnitt, in dem die mehrschichtigen leitfähigen Bänder, die an der Ober- und Unterseite angeklebt sind, in Kontakt miteinander sind, durch das Thermokompressionsbonden abgedichtet ist.

## Revendications

1. Batterie secondaire comprenant :
un ensemble d'électrodes dans lequel sont empilés, en alternance, une ou plusieurs électrodes et des membranes de séparation ;
un boîtier de batterie dans lequel est installé l'ensemble d'électrodes ;
une languette d'électrode, saillante et partant de l'électrode, empilée pour chaque polarité et soudée ;
un conducteur d'électrode, empilé et relié à la languette d'électrode, et partiellement saillant vers l'extérieur du boîtier de batterie ;
**caractérisée en ce que** la deuxième batterie comprend en outre :
un ruban conducteur multicouche, composé :
d'une couche adhésive ;
d'une couche électro-conductrice positionnée sur un côté de la couche adhésive ;
d'une couche isolante positionnée sur un côté de la couche électro-conductrice ; et
d'une couche de protection pour protéger une surface extérieure de la couche isolante ;
une largeur W du ruban conducteur multicouche s'étendant dans le sens de la largeur depuis les bouts d'une surface, l'autre surface de l'ensemble électrodes faisant face au boîtier de la batterie jusqu'à au moins une partie d'une portion dans laquelle la languette d'électrode et le conducteur d'électrode sont connectés et se chevauchent.

2. Batterie secondaire selon la revendication 1, la couche électro-conductrice comprenant un métal, le métal comprenant un ou plusieurs des suivants: cuivre, aluminium, titane, silicium, magnésium et acier inoxydable.

3. Batterie secondaire selon la revendication 1, la couche isolante étant constituée d'un matériau sélectionné dans le groupe composé de polyéthylène téréphtalate, polyimide, polypropylène, polystyrène, polybutylène, polyéthylène, et de combinaisons de ces derniers.

4. Batterie secondaire selon la revendication 1, comprenant en outre:
une deuxième couche isolante positionnée sur un côté de la couche de protection.

5. Batterie secondaire selon la revendication 1, la couche adhésive comprenant un substrat sous forme d'un treillis, et une résine présentant une adhésivité,
un quelconque, ou plusieurs, du substrat et de la résine comprenant un matériau électro-conducteur.

6. Batterie secondaire selon la revendication 1, le ruban conducteur multicouche adhérant à au moins un d'un côté supérieur et d'un côté inférieur dans une direction d'empilement, dans une position où la languette d'électrode et le conducteur d'électrode sont empilés et connectés.

7. Batterie secondaire selon la revendication 6, le ruban conducteur multicouche couvrant au moins une partie d'une portion dans laquelle la languette d'électrode et le conducteur d'électrode sont connectés et se chevauchent.

8. Batterie secondaire selon la revendication 7, dans laquelle, dans le ruban conducteur multicouche, une largeur W dans une direction dans laquelle s'étend le conducteur d'électrode jusqu'à la languette d'électrode est supérieure à une largeur d'une portion où la languette d'électrode et le conducteur d'électrode sont connectés et se chevauchent.

9. Batterie secondaire selon la revendication 6, le ruban conducteur multicouche scellant une surface de contact de la languette d'électrode et du conducteur d'électrode, et du boîtier de la batterie.

10. Batterie secondaire selon la revendication 6, le ruban conducteur multicouche adhérant à un côté supérieur et un côté inférieur d'un emplacement où la languette d'électrode et le conducteur d'électrode sont connectés et se chevauchent dans une direction perpendiculaire à une direction dans laquelle s'étend le conducteur d'électrode, et
les rubans conducteurs multicouches sur un côté supérieur et un côté inférieur positionnés dans une portion où la languette d'électrode et le conducteur d'électrode ne sont pas positionnés dans la direction perpendiculaire à la direction dans laquelle s'étend le conducteur d'électrode adhérant l'un à l'autre et étant scellés.

11. Procédé de fabrication d'une batterie secondaire selon la revendication 1, le procédé comprenant :
la fabrication d'un ensemble d'électrodes en empilant, en alternance, une pluralité d'électrodes et des membranes de séparation ;
l'exécution d'un pré-soudage avec collecte et soudage de languettes d'électrodes agencées aux bouts de la pluralité d'électrodes ;
l'exécution d'un soudage principal en chevauchant les bouts de la languette d'électrode et d'un conducteur d'électrode, et en soudant la languette et le conducteur d'électrode ;
l'exécution de l'adhérence d'un ruban conducteur multicouche à au moins un d'un côté supérieur et d'un côté inférieur d'une position où la languette d'électrode et le conducteur d'électrode se chevauchent ; et
l'exécution d'une fixation par thermocompression sur une surface adhésive du ruban conducteur multicouche par la chaleur,
le ruban conducteur multicouche comprenant:
une couche adhésive ;
une couche électro-conductrice positionnée sur un côté de la couche adhésive ;
une couche isolante positionnée sur un côté de la couche électro-conductrice ; et
une couche de protection pour protéger une surface extérieure de la couche isolante ;
une largeur W du ruban conducteur multicouche s'étendant dans le sens de largeur depuis les bouts d'une surface, et l'autre surface de l'ensemble électrodes faisant face au boîtier de la batterie jusqu'à au moins une partie d'une portion dans laquelle la languette d'électrode et le conducteur d'électrode sont connectés et se chevauchent.

12. Procédé selon la revendication 11, l'opération de l'exécution de la fixation par thermocompression comprenant l'exécution de la fixation par thermocompression sur la surface adhésive du ruban conducteur multicouche à une température comprise entre 50°C et 300°C avec une pression comprise entre 0,2 mpa et 1,0 mpa.

13. Procédé selon la revendication 11, le ruban conducteur multicouche adhérant à un côté supérieur et un côté inférieur de la position dans laquelle la languette d'électrode et le conducteur d'électrode se chevauchent, et une partie dans laquelle les rubans conducteurs multicouches adhérant aux côtés supérieur et inférieur sont en contact entre eux étant scellée par le biais de la fixation par thermocompression.
